# EUROPÄISCHE PATENTANMELDUNG

(11) **EP 4 800 450 A1**
(43) Veröffentlichungstag der Anmeldung: **02.09.2026**
(21) Anmeldenummer: 25160792.5
(22) Anmeldetag: 28.02.2025
(51) Int. Cl.: G02B 6/38, G02B 6/42

(54) **OPTOELEKTRISCHER STECKVERBINDER, OPTISCHE STECKVERBINDUNG UND BAUGRUPPENANORDNUNG**

(71) Anmelder: Rosenberger Hochfrequenztechnik GmbH & Co. KG, 83413 Fridolfing (DE)
(72) Erfinder: Fischer, Andreas, 83413 Fridolfing (DE); Schmidt, Stefan, 83413 Fridolfing (DE); Maier, Thomas, 83413 Fridolfing (DE)
(74) Vertreter: Lorenz & Kollegen

(57) **Zusammenfassung**

Die Erfindung betrifft einen optoelektrischen Steckverbinder (2) für eine elektrische Baugruppe (3), zur Verbindung mit einem optischen Gegensteckverbinder (26), mit einem Steckverbindergehäuse (6) und mit einer in dem Steckverbindergehäuse (6) aufgenommenen optischen Baugruppe (12). Die optische Baugruppe (12) weist einen mit der elektrischen Baugruppe (3) elektrisch verbindbaren, primären elektrischen Schaltungsträger, vorzugsweise eine primäre elektrische Leiterplatte (13), auf. Die optische Baugruppe (12) weist außerdem ein optoelektronisches Bauteil (14) mit wenigstens einer elektrisch mit dem primären elektrischen Schaltungsträger (13) verbundenen elektrischen Schnittstelle (22) und mit wenigstens einer optischen Schnittstelle (28) auf. Außerdem weist die optische Baugruppe (12) ein optisches Element (15) auf, mit wenigstens einem durch eine erste Öffnung (25) in dem Steckverbindergehäuse (6) für eine optische Verbindung mit dem optischen Gegensteckverbinder (26) zugänglichen, ersten optischen Verbindungsbereich (24) und mit wenigstens einem zweiten optischen Verbindungsbereich (27), der zur optischen Signalübertragung auf die optische Schnittstelle (28) des optoelektronischen Bauteils (14) ausgerichtet ist. Es ist vorgesehen, dass das optoelektronische Bauteil (14) und das optische Element (15) relativ zueinander unbeweglich mit dem primären elektrischen Schaltungsträger (13) verbunden sind.

## Beschreibung

Die Erfindung betrifft einen optoelektrischen Steckverbinder für eine elektrische Baugruppe, zur Verbindung mit einem optischen Gegensteckverbinder, mit einem Steckverbindergehäuse und mit einer in dem Steckverbindergehäuse aufgenommenen optischen Baugruppe.

Die Erfindung betrifft ferner eine optische Steckverbindung, aufweisend einen optoelektrischen Steckverbinder und einen optischen Gegensteckverbinder.

Die Erfindung betrifft außerdem eine Baugruppenanordnung, aufweisend einen optoelektrischen Steckverbinder und eine elektrische Baugruppe.

Zur Übertragung von Daten, beispielsweise in einem Automobil, ist die elektrische Verbindungstechnik noch weit verbreitet. Gegenüber der elektrischen Verbindungstechnik ist die optische Übertragungstechnik unempfindlicher bezüglich elektromagnetischen Einstreuungen. Außerdem ermöglicht ein optisches Datennetz eine Datenübertragung mit einer höheren Bandbreite und ist mit einem geringeren Verkabelungsgewicht und somit geringeren Verkabelungskosten verbunden. Daher ist eine Datenübertragung über optische Lichtwellenleiter grundsätzlich erstrebenswert.

Für die optische Datenübertragung kommen optische Steckverbinder zum Einsatz, an denen einerseits eine optische Schnittstelle zum Lichtwellenleiter (z. B. einem Glasfaserkabel) und andererseits eine Schnittstelle zu einer elektrischen Baugruppe (z. B. einem Steuergerät in einem Automobil) ausgebildet ist. Für eine korrekte Funktionsweise der optischen Datenübertragung ist eine hochpräzise Positionierung und Orientierung der einzelnen optischen Komponenten wesentlich.

Aus der US 11,543,603 B2 ist eine optische Steckverbindung aus einem optischen Kabelsteckverbinder und einem korrespondierenden, auf einer elektrischen Leiterplatte befestigten Gehäusesockel einer elektrischen Baugruppe bekannt. In dem Kabelsteckverbinder sind eine optische Ferrule zur mechanischen Fixierung der Glasfaser und ein optisches Element zur Strahlumlenkung in Richtung auf die elektrische Leiterplatte der elektrischen Baugruppe ausgebildet. Die Optoelektronik, also das optoelektronische Bauteil zur Signalwandlung zwischen optischen und elektrischen Signalen, ist auf der elektrischen Leiterplatte innerhalb des Gehäusesockels angeordnet und weist eine zum Kabelsteckverbinder gerichtete optische Schnittstelle auf.

Bei dem bekannten Stand der Technik ist die präzise Ausrichtung und Montage des Gehäusesockels relativ zu der Optoelektronik vergleichsweise aufwändig und muss in der Regel von dem Abnehmer des Gehäusesteckverbinders durchgeführt werden. Daher stehen hochpräzise, industrielle Montageverfahren regelmäßig nicht zur Verfügung. Ferner sind die bekannten optischen Steckverbindungen anfällig für mechanische Belastung. Ein Kabelzug wird beispielsweise von dem optischen Kabelsteckverbinder unmittelbar auf den Gehäusesockel übertragen und kann dadurch eine Verschiebung des Gehäusesockels relativ zu der auf der elektrischen Leiterplatte positionierten Optoelektronik verursachen.

In Anbetracht des bekannten Stands der Technik besteht die Aufgabe der vorliegenden Erfindung darin, einen optoelektrischen Steckverbinder bereitzustellen, dessen optische Signalübertragung unempfindlich gegenüber mechanischer Beeinflussung ist, und der vorzugsweise hochpräzise und kostengünstig montierbar ist.

Der vorliegenden Erfindung liegt auch die Aufgabe zugrunde, eine optische Steckverbindung bereitzustellen, deren optische Signalübertragung unempfindlich gegenüber mechanischer Beeinflussung ist, und deren Verbindungspartner vorzugsweise hochpräzise und kostengünstig montierbar sind.

Schließlich ist es auch Aufgabe der Erfindung, eine Baugruppenanordnung bereitzustellen, deren optische Signalübertragung unempfindlich gegenüber mechanischer Beeinflussung ist, und deren Komponenten vorzugsweise hochpräzise und kostengünstig vormontierbar sind.

Die Aufgabe wird für den optoelektrischen Steckverbinder mit den in Anspruch 1 aufgeführten Merkmalen gelöst. Hinsichtlich der optischen Steckverbindung wird die Aufgabe durch die Merkmale des Anspruchs 12 und bezüglich der Baugruppenanordnung durch die Merkmale des Anspruchs 15 gelöst.

Die abhängigen Ansprüche und die nachfolgend beschriebenen Merkmale betreffen vorteilhafte Ausführungsformen und Varianten der Erfindung.

Die Erfindung betrifft einen optoelektrischen Steckverbinder für eine elektrische Baugruppe, zur Verbindung mit einem optischen Gegensteckverbinder, mit einem Steckverbindergehäuse und mit einer in dem Steckverbindergehäuse zumindest abschnittsweise, vorzugsweise vollständig, aufgenommenen optischen Baugruppe.

Unter einem "optoelektrischen" Steckverbinder" ist vorliegend ein Steckverbinder zu verstehen, der einerseits einen optischen Anschlussbereich bzw. ein optisches Interface und andererseits einen elektrischen Anschlussbereich bzw. ein elektrisches Interface aufweist. Die Wandlung zwischen optischen und elektrischen Signalen kann somit vorteilhaft innerhalb des optoelektrischen Steckverbinders erfolgen.

Der optoelektrische Steckverbinder ist vorliegend zur Verwendung mit einer elektrischen Baugruppe ausgebildet und kann daher auch als optoelektrischer Baugruppensteckverbinder bzw. optoelektrischer Leiterplattensteckverbinder bezeichnet werden. Vorzugsweise handelt es sich bei dem optoelektrischen Steckverbinders daher nicht um einen mit einem elektrischen oder optischen Kabel unmittelbar verbundenen Steckverbinder.

Das Steckverbindergehäuse des optoelektrischen Steckverbinders kann vorzugsweise aus einem Kunststoff, und insbesondere als Spritzgussteil ausgebildet sein. Grundsätzlich kann das Steckverbindergehäuse allerdings aus einem beliebigen Material (z. B. auch aus einem Metall) und auf beliebige Weise hergestellt sein.

Erfindungsgemäß weist die optische Baugruppe einen mit der elektrischen Baugruppe elektrisch verbindbaren, primären elektrischen Schaltungsträger auf.

Vorzugsweise handelt es sich bei dem primären elektrischen Schaltungsträger um eine primäre elektrische Leiterplatte ("Printed Circuit Board", PCB). Grundsätzlich kann allerdings ein beliebiger Träger für eines oder mehrere elektrische Bauteile vorgesehen sein. Bei dem elektrischen Schaltungsträger kann es sich daher beispielsweise auch um einen integrierten Schaltkreis handeln (z. B. um einen Mikrocontroller). Insofern nachfolgend bezüglich eines "Schaltungsträgers" konkret auf eine "Leiterplatte" Bezug genommen wird, so ist dies nur beispielhaft zu verstehen.

Die primäre elektrische Leiterplatte (und gegebenenfalls auch die nachfolgend noch erwähnte, sekundäre elektrische Leiterplatte) kann ein- oder mehrlagig ausgebildet sein. Vorzugsweise kann die primäre bzw. sekundäre elektrische Leiterplatte aus glasfaserverstärktem Epoxidharz hergestellt sein. Insbesondere für Höchstfrequenzanwendungen können gegebenenfalls aber auch noch andere Bauweisen in Frage kommen, wie beispielsweise auf Grundlage einer Keramik.

Insofern nachfolgend davon gesprochen wird, dass eines oder mehrere Bauteile bzw. Komponenten mit einem der elektrischen Schaltungsträger bzw. mit einer der elektrischen Leiterplatten verbunden sind, ist hierunter insbesondere auch zu verstehen, dass besagte Bauteile bzw. Komponenten mit der jeweiligen elektrischen Schaltung des Schaltungsträgers bzw. der Leiterplatte verbunden sind. Die Bauteile bzw. Komponenten können gegebenenfalls auch nur mittelbar mit dem elektrischen Schaltungsträger bzw. der elektrischen Leiterplatte verbunden sein, indem sie unmittelbar mit einem der elektrischen Bauteile der elektrischen Schaltung verbunden sind (z. B. durch separate Bonddrähte).

Erfindungsgemäß weist die optische Baugruppe außerdem ein optoelektronisches Bauteil auf, mit wenigstens einer mittelbar oder unmittelbar elektrisch mit dem primären elektrischen Schaltungsträger (bzw. der auf dem Schaltungsträger angeordneten elektrischen Schaltung oder zumindest einem der elektrischen Bauteile des Schaltung) verbundenen elektrischen Schnittstelle (insbesondere eine permanente bzw. festverdrahtete Schnittstelle, im Gegensatz zu einer Steckschnittstelle) und mit wenigstens einer optischen Schnittstelle.

Bei dem optoelektronischen Bauteil handelt es sich um das Bauteil des optoelektrischen Steckverbinders, das für die Signalwandlung zwischen elektrischen und optischen Signalen primär verwendbar ist. Dementsprechend kann das optoelektronische Bauteil elektrische und optische Signaleingänge und/oder Signalausgänge aufweisen.

Erfindungsgemäß weist die optische Baugruppe ein optisches Element auf, mit wenigstens einem durch eine erste Öffnung in dem Steckverbindergehäuse für eine optische Verbindung mit dem optischen Gegensteckverbinder zugänglichen, ersten optischen Verbindungsbereich und mit wenigstens einem zweiten optischen Verbindungsbereich, der zur optischen Signalübertragung auf die optische Schnittstelle des optoelektronischen Bauteils ausgerichtet ist.

Die erste Öffnung in dem Steckverbindergehäuse ist vorzugsweise in Steckrichtung orientiert.

Erfindungsgemäß ist vorgesehen, dass das optoelektronische Bauteil und das optische Element relativ zueinander unbeweglich mit dem primären elektrischen Schaltungsträger verbunden sind. Vorzugsweise ist eine dauerhafte (beispielsweise zerstörungsfrei untrennbare) mechanische Verbindung vorgesehen, so dass die Ausrichtung des optoelektronischen Bauteils und des optischen Elements relativ zueinander im regulären Betrieb bzw. bei allen erwarteten Betriebszuständen des Steckverbinders (die beispielsweise auch einen Kabelzug oder eine sonstige mechanische Belastung des Steckverbindergehäuses einschließen) unveränderlich ist.

Auf vorteilhafte Weise führt eine mechanische Beeinflussung, beispielsweise durch Kabelzug am Gegensteckverbinder, im Bereich der Steckschnittstelle des optoelektrischen Steckverbinders nicht zu einer mechanischen Beeinflussung der optischen Verbindung zwischen dem optoelektronischen Bauteil und dem optischen Element, da beide gemeinsam in der optischen Baugruppe mit dem primären elektrischen Schaltungsträger verbunden und dadurch relativ zueinander unbeweglich sind.

Auf vorteilhafte Weise kann die optische Verbindung zwischen dem Steckverbinder und dem Gegensteckverbinder in der Steckschnittstelle von der mechanischen Verbindung entkoppelt sein. Mechanische Belastungen, die über den Gegensteckverbinder in das Gesamtsystem eingebracht werden, können daher vorteilhaft auf das Steckverbindergehäuse des optoelektrischen Steckverbinders und von dem Steckverbindergehäuse weiter auf ein Baugruppengehäuse der elektrischen Baugruppe abgeleitet werden.

Der optoelektrische Steckverbinder kann außerdem bereits vom Steckverbinderhersteller hochpräzise industriell vormontiert sein, so dass bereits im Auslieferungszustand eine optimale Ausrichtung zwischen dem optoelektrischen Bauteil und dem optischen Element sichergestellt ist. Der Endkunde bzw. Abnehmer des Steckverbinders muss lediglich noch die mechanische und elektrische Montage an der elektrischen Baugruppe vornehmen, was in der Regel ohne Weiteres und mit deutlich verringerten Genauigkeitsanforderungen erfolgen kann.

In einer vorteilhaften Weiterbildung der Erfindung kann vorgesehen sein, dass der primäre elektrische Schaltungsträger der optischen Baugruppe durch eine zweite Öffnung des Steckverbindergehäuses für eine elektrische und mechanische Verbindung mit einem sekundären elektrischen Schaltungsträger der elektrischen Baugruppe zugänglich ist.

Die zweite Öffnung ist in dem Steckverbindergehäuse vorzugsweise seitlich bzw. winklig (insbesondere orthogonal) zu einer Steckrichtung des optoelektrischen Steckverbinders orientiert. Die zweite Öffnung kann grundsätzlich allerdings auch in Steckrichtung ausgerichtet sein.

Die zweite Öffnung ist vorzugsweise winklig zu der ersten Öffnung orientiert, besonders bevorzugt zumindest im Wesentlichen orthogonal zu der ersten Öffnung. Grundsätzlich kann allerdings auch eine parallele Ausrichtung der ersten Öffnung und der zweiten Öffnung vorgesehen sein.

Vorzugsweise bildet das Steckverbindergehäuse also im Bereich der zweiten Öffnung zusammen mit dem primären elektrischen Schaltungsträger einen elektrischen und mechanischen Anschlussbereich zur Verbindung mit der elektrischen Baugruppe aus, bei dem es sich vorzugsweise nicht um eine Steckschnittstelle handelt. Die Verbindung zwischen dem primären elektrischen Schaltungsträger und der elektrischen Baugruppe, insbesondere mit einem sekundären elektrischen Schaltungsträger der elektrischen Baugruppe, erfolgt vorzugsweise permanent bzw. festverdrahtet, im Gegensatz zu einer steckbaren Verbindung. Unter einer "permanenten" bzw. "festverdrahteten" Verbindung ist im Rahmen der Erfindung allerdings nicht unbedingt zu verstehen, dass besagte Verbindung zwingend unlösbar ist. Denn gegebenenfalls kann besagte Verbindung auch zerstörungsfrei wieder lösbar sein (z. B. durch Entlöten einer Lötverbindung).

Vorzugsweise kann somit beispielsweise die primäre elektrische Leiterplatte des optoelektrischen Steckverbinders permanent und besonders bevorzugt auch unmittelbar mit einer sekundären elektrischen Leiterplatte der elektrischen Baugruppe verbunden sein.

An dieser Stelle sei erwähnt, dass alternativ oder zusätzlich zu einer galvanischen bzw. permanenten elektrischen und mechanischen Verbindung zwischen dem primären elektrischen Schaltungsträger und dem sekundären elektrischen Schaltungsträger bzw. der elektrischen Baugruppe gegebenenfalls auch eine drahtlose elektrische Verbindung vorgesehen sein kann, um drahtlos (z. B. mittels induktiver und/oder kapazitiver Kopplung) elektrische Daten- und/oder Versorgungssignale zwischen den beiden Schaltungsträgern auszutauschen.

Gemäß einer Weiterbildung der Erfindung kann insbesondere vorgesehen sein, dass der primäre elektrische Schaltungsträger für die permanente (und vorzugsweise unmittelbare) Verbindung mit dem sekundären elektrischen Schaltungsträger der elektrischen Baugruppe wenigstens ein elektrisches Verbindungsmittel aufweist.

Bei dem elektrischen Verbindungsmittel kann es sich beispielsweise um eine Lötfläche, eine elektrisch leitfähig beschichtete Kontaktfläche, einen Lötkontaktstift, einen Einpresskontakt, eine elektrische Kontaktaufnahme (z. B. ein "Via") oder ein sonstiges elektrisches Verbindungsmittel handeln.

Bei dem elektrischen Verbindungsmittel kann es sich vorzugsweise gleichzeitig um ein mechanisches Verbindungsmittel handeln (wie z. B. im Falle eines Lötkontaktstiftes). Optional können zusätzlich zu den elektrischen Verbindungsmitteln aber ergänzend auch noch rein mechanische Verbindungsmittel vorgesehen sein, wie beispielsweise Klebeflächen oder Rastelemente.

Grundsätzlich kann der primäre elektrische Schaltungsträger für die Verbindung mit dem sekundären elektrischen Schaltungsträger der elektrischen Baugruppe eine beliebige Anzahl elektrischer Verbindungsmittel aufweisen, beispielsweise ein Verbindungsmittel oder zwei Verbindungsmittel pro Datenübertragungskanal.

Gemäß einer Weiterbildung der Erfindung kann vorgesehen sein, dass das Steckverbindergehäuse wenigstens einen Befestigungsabschnitt zur mechanischen Befestigung an der elektrischen Baugruppe aufweist, insbesondere zur Befestigung an einem Baugruppengehäuse der elektrischen Baugruppe.

Bei dem Befestigungsabschnitt des Steckverbindergehäuses kann es sich beispielsweise um eine Vertiefung (z. B. um eine umfangsseitig umlaufende Nut) oder um eine Erhebung (z. B. um eine umfangsseitig umlaufende Rippe oder um einen Flansch) handeln. Vorzugsweise ist der Befestigungsabschnitt als umfangsseitig umlaufende Nut ausgebildet, so dass das Steckverbindergehäuse in einer Durchführung in dem Baugruppengehäuse der elektrischen Baugruppe montierbar ist.

Es sei an dieser Stelle allerdings betont, dass das Steckverbindergehäuse nicht zwingend einen Befestigungsabschnitt zur separaten Befestigung an dem Baugruppengehäuse aufweisen muss. Beispielsweise kann auch vorgesehen sein, dass das Baugruppengehäuse lediglich eine Durchführung oder eine sonstige, ausreichend große bzw. geometrisch angepasste ZugangsÖffnung für das Steckverbindergehäuse aufweist, durch die das Steckverbindergehäuse hindurchgeführt ist oder auf die das Steckverbindergehäuse aufgesetzt sein kann. Das Steckverbindergehäuse und/oder der primäre elektrische Schaltungsträger können in diesem Fall beispielsweise einzig über den sekundären elektrischen Schaltungsträger mit der elektrischen Baugruppe verbunden sein (also z. B. durch eine Löt-, Press- oder sonstige elektrische und/oder mechanische Verbindung zwischen den elektrischen Schaltungsträgern und/oder durch eine unmittelbare mechanische Rastverbindung zwischen dem Steckverbindergehäuse und dem sekundären elektrischen Schaltungsträger). Gegebenenfalls kann das Steckverbindergehäuse in diesem Fall auch als obere Gehäuseschale des Baugruppengehäuses oder als Deckel des Baugruppengehäuses dienen und insgesamt auf den sekundären Schaltungsträger aufgesetzt sein.

In einer Weiterbildung der Erfindung kann vorgesehen sein, dass das optoelektronische Bauteil und/oder das optische Element stoffschlüssig mit dem primären elektrischen Schaltungsträger verbunden sind. Insbesondere können das optoelektronische Bauteil und/oder das optische Element mit dem primären elektrischen Schaltungsträger verklebt sein.

Die stoffschlüssige Verbindung bzw. die Klebetechnik hat sich als besonders robuste und im Rahmen der Montage auch technisch einfach und präzise realisierbare Befestigungstechnik herausgestellt.

Grundsätzlich kommt allerdings eine beliebige Befestigungstechnik zur Befestigung des optoelektronischen Bauteils und/oder des optischen Elements in Frage, also beispielsweise auch eine kraftschlüssige und/oder formschlüssige Verbindung mit dem primären elektrischen Schaltungsträger. Auch eine Kombination mehrerer Befestigungstechniken ist grundsätzlich möglich.

In einer Weiterbildung der Erfindung kann vorgesehen sein, dass der zweite optische Verbindungsbereich des optischen Elements die optische Schnittstelle des optoelektronischen Bauteils unmittelbar mechanisch kontaktiert.

Alternativ kann vorgesehen sein, dass der zweite optische Verbindungsbereich des optischen Elements über einem Luftspalt oder über ein optisches Zwischenelement von der optischen Schnittstelle des optoelektronischen Bauteils beabstandet ist.

In einer vorteilhaften Weiterbildung der Erfindung kann vorgesehen sein, dass das Steckverbindergehäuse im Bereich der ersten Öffnung eine primäre mechanische Steckschnittstelle (im Gegensatz zu einer vorstehend beschriebenen "permanenten" bzw. "festverdrahteten" Verbindung) zur Verbindung mit dem optischen Gegensteckverbinder ausbildet bzw. dass besagte primäre mechanische Steckschnittstelle in der ersten Öffnung angeordnet ist.

Vorzugsweise weist die primäre mechanische Steckschnittstelle ein Rastelement (z. B. einen Rasthaken oder eine sonstige außenmantelseitige Erhebung, eine Federlasche, eine Rastvertiefung oder einen sonstigen Rücksprung) zur Verrastung mit einem korrespondierenden Gegenrastelement des optischen Gegensteckverbinders auf.

In einer Weiterbildung der Erfindung kann vorgesehen sein, dass das optische Element eine sekundäre mechanische Steckschnittstelle zur gegenseitigen Ausrichtung und Verbindung mit einem optischen Gegenelement und/oder einer Ferrule des optischen Gegensteckverbinders ausbildet.

Das Steckverbindergehäuse bildet im Bereich der ersten Öffnung damit vorzugsweise zusammen mit dem optischen Element einen optischen und mechanischen, steckbaren Anschlussbereich zur Verbindung mit dem optischen Gegensteckverbinder aus.

Die sekundäre mechanische Schnittstelle kann insbesondere für eine Feinausrichtung bzw. Feinjustage zwischen den optischen Komponenten der Verbindungspartner ausgebildet sein, insbesondere wenn zusätzlich die vorstehend bereits erwähnte primäre mechanische Schnittstelle vorhanden ist, die vornehmlich einer stabilen, jedoch rein mechanischen Verbindung zwischen dem Steckverbinder und dem Gegensteckverbinder dienen kann, um größere mechanische Kräfte im Betrieb der Steckverbindung aufzunehmen.

An dieser Stelle sei erwähnt, dass der Gegensteckverbinder, Komponenten des Gegensteckverbinders (insbesondere betreffend die nachfolgen noch erwähnte Ferrule und deren schwimmende Lagerung) und gegebenenfalls auch Komponenten des optoelektrischen Steckverbinders vorzugsweise ausgebildet sein können, wie in der europäischen Patentanmeldung Nr. 24 175 125.4 beschrieben, deren Inhalt durch Verweis hierin vollständig mit aufgenommen wird, sofern dies technisch nicht ausgeschlossen ist.

Vorzugsweise weist die sekundäre mechanische Schnittstelle einen sich in Steckrichtung erstreckenden Rücksprung und/oder Vorsprung auf. Insbesondere kann vorgesehen sein, dass das optische Gegenelement und/oder die Ferrule des optischen Gegensteckverbinders in eine korrespondierende Vertiefung des optischen Elements oder in einen Spalt zwischen dem Steckverbindergehäuse und dem optischen Element des Steckverbinders einzugreifen vermag - oder umgekehrt. In einer besonders bevorzugten Variante kann insbesondere auch vorgesehen seien, dass das optische Gegenelement und/oder die Ferrule des optischen Gegensteckverbinders und das optische Element des Steckverbinders gegenseitig ineinander eingreifen.

In einer vorteilhaften Weiterbildung der Erfindung kann vorgesehen sein, dass das optische Element ein Strahlformungsmittel (z. B. eine Linse), ein Strahlumlenkungsmittel (z. B. einen Spiegel oder ein Prisma) und/oder ein Strahlaufteilungsmittel aufweist.

Insbesondere kann vorgesehen sein, dass das optische Element an dem ersten optischen Verbindungsbereich, der der ersten Öffnung in dem Steckverbindergehäuse zugeordnet ist, ein Strahlformungsmittel aufweist. Optional kann zwischen dem ersten optischen Verbindungsbereich und dem zweiten optischen Verbindungsbereich des optischen Elements zusätzlich oder alternativ ein Strahlumlenkungsmittel angeordnet sein, um den Strahlengang ausgehend von der Steckrichtung umzulenken, beispielsweise zumindest im Wesentlichen orthogonal umzulenken. Es kann allerdings grundsätzlich auch eine parallel zu der Steckrichtung verlaufende Weiterleitung des optischen Signals durch das optische Element vorgesehen sein.

An dieser Stelle sei erwähnt, dass alternativ oder zusätzlich zu einem Strahlumformung-, Strahlumlenkungs- oder Strahlaufteilungsmittel des optischen Elements auch vorgesehen sein, dass das optoelektronische Bauteil ein integrales Strahlumformung-, Strahlumlenkungs- und/oder Strahlaufteilungsmittel aufweist.

In einer vorteilhaften Weiterbildung der Erfindung kann vorgesehen sein, dass das optoelektronische Bauteil eine optische Strahlungsquelle, einen Photodetektor und/oder einen optischen Transceiver aufweist.

Bei der optischen Strahlungsquelle kann es sich vorzugsweise um eine Leuchtdiode, eine Laser-Diode, eine Superlumineszenz-Diode oder um einen Vertical-Cavity Surface-Emitting Laser (VCSEL) handeln. Bei dem Photodetektor kann es sich beispielsweise um eine Photodiode oder um einen Phototransistor handeln.

In einer vorteilhaften Weiterbildung der Erfindung kann vorgesehen sein, dass der primäre elektrische Schaltungsträger eines oder mehrere elektrische Bauteile aufweist, die einzeln oder in Kombination eine primäre elektrische Schaltung zur elektrischen Versorgung des optoelektronischen Bauteils und/oder zur elektrischen Signalverarbeitung von über das optoelektronische Bauteil empfangenen oder zu übertragenden Signalen ausbilden.

Die elektrische Versorgungsschaltung kann beispielsweise Spannungsregelungen, Strombegrenzungen oder Leistungsanpassungen umfassen, um den Betrieb des optoelektronischen Bauteils sicherzustellen und zu steuern. Bei der elektrischen Versorgungsschaltung kann es sich insbesondere um einen Leistungstreiber für das optoelektronische Bauteil handeln bzw. die Versorgungsschaltung kann einen Leistungstreiber umfassen. Die Signalverarbeitungsschaltung kann beispielsweise eine analoge und/oder digitale Signalaufbereitung aufweisen, wie etwa eine Signalverstärkung, Signalentzerrung, Signalfilterung, Signalmodulation oder Signaldemodulation.

Vorzugsweise kann vorgesehen sein, dass das optoelektronische Element unmittelbar elektrisch und mechanisch mit der elektrischen Versorgungsschaltung bzw. dem Leistungstreiber verbunden ist (beispielsweise mittels Bonddrähten), um möglichst kurze Signalwege zu gewährleisten. Gleichwohl kann das optoelektronische Element zusätzlich auch unmittelbar mit dem primären elektrischen Schaltungsträger verbunden sein, insbesondere in diesem Fall jedoch rein mechanisch, beispielsweise stoffschlüssig bzw. über eine Klebeverbindung.

An dieser Stelle sei erwähnt, dass der optoelektrische Steckverbinder für eine einkanalige Datenübertragung (unidirektional oder bidirektional) oder für eine mehrkanalige Datenübertragung ausgebildet sein kann. Im Falle einer bidirektionalen Datenübertragung oder im Falle einer mehrkanaligen Datenübertragung kann das optoelektrische Bauteil dementsprechend geeignet sein oder in dem optoelektrischen Steckverbinder mehrfach vorhanden sein (z. B. kann eine Reihe oder ein Array aus mehreren Strahlungsquellen und Photodetektoren vorgesehen sein). Entsprechendes gilt auch für den bereits erwähnten primären elektrischen Schaltungsträger (der vorzugsweise jedoch nur einfach in dem optoelektrischen Steckverbinder vorhanden ist) und das nachfolgend noch erwähnte optische Element.

Der optoelektrische Steckverbinder kann optional eine elektromagnetische Schirmung aufweisen, die beispielsweise als Schirmungsblech oder metallische Beschichtung oder vollständig metallische Ausgestaltung des Steckverbindergehäuses ausgebildet sein kann. Die elektromagnetische Schirmung kann den optoelektrischen Steckverbinder vollständig umhüllen, vorzugsweise aber zumindest im Bereich des primären elektrischen Schaltungsträgers und/oder an dem Anschlussbereich zwischen dem optoelektrischen Steckverbinder und der elektrischen Baugruppe vorgesehen sein. Dabei kann insbesondere vorgesehen sein, dass die elektromagnetische Schirmung des optoelektrischen Steckverbinders elektrisch mit einem Referenzpotential (z. B. Masse) des sekundären elektrischen Schaltungsträgers der elektrischen Baugruppe verbunden ist, beispielsweise durch eine Verlötung wenigstens eines Schirmungspins in einer Durchkontaktierung bzw. in einem Via der sekundären elektrischen Leiterplatte.

Der optoelektrische Steckverbinder kann optional eine Abdichtung gegenüber Feuchtigkeit und/oder Staub bzw. sonstige Verschmutzungen aufweisen. Beispielsweise kann eine Abdichtung im Bereich der optischen und mechanischen Schnittstelle zur Verbindung mit dem optischen Gegensteckverbinder und/oder zwischen dem optoelektrischen Steckverbinder bzw. dem Steckverbindergehäuse des optoelektrischen Steckverbinders und einem Baugruppengehäuse der elektrischen Baugruppe vorgesehen sein.

An dieser Stelle sei noch betont, dass der optoelektrische Steckverbinder (insbesondere der optische Anschlussbereich bzw. das optische Interface) im Rahmen der Erfindung grundsätzlich gemäß einem beliebigen Standard ausgebildet sein kann. Der optoelektrische Steckverbinder kann außerdem gewinkelt oder geradlinig ausgebildet sein. Ferner kann, wie bereits erwähnt, die Datenübertragung durch den Steckverbinder über eine beliebige Anzahl Datenkanäle erfolgen, weshalb die vorstehend beschriebenen Komponenten des Steckverbinders oder deren Einzelbestandteile / funktionalen Bereiche gegebenenfalls auch mehrfach in dem Steckverbinder ausgebildet sein können (z. B. das optoelektrische Bauteil und das optische Element).

Die Erfindung betrifft auch eine optische Steckverbindung, aufweisend einen optoelektrischen Steckverbinder gemäß den vorstehenden und nachfolgenden Ausführungen und den optischen Gegensteckverbinder.

Bei dem optischen Gegensteckverbinder handelt es sich vorzugsweise um einen optischen Kabelsteckverbinder, also um einen optischen Steckverbinder, der unmittelbar mit einem Lichtwellenleiter, wie beispielsweise einem Glasfaserkabel, verbunden ist.

Es kann vorgesehen sein, dass der optische Gegensteckverbinder im Bereich einer Kabelzuführung eine Kabeldichtung aufweist, um eine kabelseitige Abdichtung gegenüber Feuchtigkeit und/oder Staub bzw. sonstige Verschmutzungen sicherzustellen.

In einer Weiterbildung der Erfindung kann vorgesehen sein, dass der optische Gegensteckverbinder eine mit einem Lichtwellenleiter verbundene Ferrule aufweist, um den Lichtwellenleiter mechanisch in dem Gegensteckverbinder auszurichten und zu fixieren.

Unter einer Ferrule kann hierbei und im Folgenden eine Komponente verstanden werden, welche einen axialen Endbereich einzelner Lichtwellenleiter jeweils aufzunehmen und zu fixieren vermag. Die Ferrule kann aus einem optisch transparenten Material hergestellt sein, vorzugsweise aus einem optisch transparenten Kunststoff oder alternativ aus einem optisch transparenten Glas oder aus einem optisch transparenten anorganischen Material. Insbesondere eignet sich ein thermoplastischer Kunststoff und hierzu ganz besonders Polyetherimid (PEI). Daneben ist aber als alternativer thermoplastischer Kunststoff Polycarbonat (PC) oder Polystyrol (PS) anwendbar. Die drei genannten thermoplastischen Kunststoffe sind jeweils lichtdurchlässig und somit transparent im Spektralbereich des sichtbaren Lichtes und im vorzugsweise verwendeten Spektralbereich des infraroten Lichtes, der für die Übertragung des Lichtes in den einzelnen Wellenleitern typischerweise verwendet wird. Daneben zeichnen sich die drei genannten thermoplastischen Kunststoffe durch eine einfache und hochpräzise Herstellbarkeit in einem Kunststoffspritzgussprozess aus.

Die Ferrule ist vorzugsweise einteilig ausgebildet. In einer weniger bevorzugten Ausbildung kann die Ferrule auch mehrteilig ausgebildet und durch geeignete Präzisionsverbindungstechniken miteinander verbindbar sein. Die Ferrule weist vorzugsweise eine im Wesentlichen quaderförmige Grundgeometrie auf.

Der Lichtwellenleiter des Gegensteckverbinders ist vorzugsweise als eine optische Faser und insbesondere als eine Faser aus Quarzglas, eine sogenannte optische Glasfaser, ausgebildet. Als optische Fasern sind sowohl Stufenindex- als auch Gradientenindexfasern möglich. Die optischen Fasern können sowohl mehrere Moden (so genannte optische Multimode-Fasern) als auch nur eine einzige Grund-Mode (so genannte optische Monomode-Faser) übertragen.

Die Ferrule des Gegensteckverbinders kann als optisches Gegenelement für die optische und mechanische Verbindung mit dem ersten optischen Verbindungsbereich des optischen Elements des optoelektrischen Steckverbinders dienen. Die Ferrule kann insbesondere ausgebildet sein, eine Strahlformung, ein Strahlumlenkung und/oder ein Strahlaufteilung zu bewirken.

Die Ferrule kann einen oder mehrere optische Kanäle aufweisen, um mehrere optische Signale parallel weiterzuleiten / zu empfangen.

Gemäß einer Weiterbildung der Erfindung kann vorgesehen sein, dass die Ferrule in dem optischen Gegensteckverbinder elastisch beweglich gelagert ist. Die elastische Lagerung ist vorzugsweise dergestalt, dass eine elastische Ausweichbewegung der Ferrule zumindest in Steckrichtung, vorzugsweise aber auch in wenigstens einer weiteren, besonders bevorzugt beiden weiteren Raumrichtungen möglich ist. Hierzu kann vorzugsweise ein zwischen der Ferrule und einem Gegensteckverbindergehäuse angeordnetes Federelement vorgesehen sein, insbesondere ein in Steckrichtung orientiertes bzw. vorgespanntes Federelement.

Auf vorteilhafte Weise kann der Gegensteckverbinder somit eine schwimmend gelagerte Ferrule aufweisen, wodurch eine flexible und dennoch präzise Ankopplung an das optische Element des optoelektrischen Steckverbinders ermöglicht wird.

Die Erfindung betrifft auch eine Baugruppenanordnung, aufweisend einen optoelektrischen Steckverbinder gemäß den vorstehenden und nachfolgenden Ausführungen und die elektrische Baugruppe. Es kann insbesondere vorgesehen sein, dass der primäre elektrische Schaltungsträger der optischen Baugruppe des optoelektrischen Steckverbinders mit einem sekundären elektrischen Schaltungsträger der elektrischen Baugruppe permanent (und vorzugsweise unmittelbar) elektrisch und mechanisch verbunden ist.

Auf vorteilhafte Weise kann eine integrierte optoelektrische Steckverbinderlösung für eine elektrische Baugruppe bereitgestellt werden, bei der die Fixierung des optischen Elements und des optoelektronischen Bauteils gemeinsam in dem optoelektrischen Steckverbinder verwirklicht ist, anstatt einer Aufteilung auf einen rein optischen Steckverbinder einerseits und die elektrische Baugruppe andererseits. Auf die vorgeschlagene Weise kann eine mechanische Beeinflussung im optischen Verbindungsbereich zwischen dem optoelektronischen Bauteil und dem optischen Element nahezu ausgeschlossen werden. Der optische Verbindungsbereich kann vorteilhaft vollständig von der mechanischen Verbindung zwischen dem Steckverbindergehäuse des optoelektrischen Steckverbinders und dem Gegensteckverbindergehäuse des optischen Gegensteckverbinders entkoppelt sein, wodurch beispielsweise ein Kabelzug auf das Kabel des Gegensteckverbinders direkt auf das Baugruppengehäuse der elektrischen Baugruppe abgeleitet werden kann.

Die Erfindung betrifft außerdem auch ein Verfahren zur Montage eines optoelektrischen Steckverbinders, aufweisend zumindest die folgenden Verfahrensschritte:
- Montieren einer optischen Baugruppe durch Verbinden einer elektrischen Schnittstelle eines optoelektronischen Bauteils mit einem primären elektrischen Schaltungsträger und Ausrichten eines optischen Elements auf eine optische Schnittstelle des optoelektrischen Bauteils, wobei das optische Element relativ zu dem optoelektrischen Bauteil unbeweglich mit dem primären elektrischen Schaltungsträger verbunden wird;
- Befestigen der optischen Baugruppe in einem Steckverbindergehäuse, so dass der primäre elektrische Schaltungsträger mit einer separaten elektrischen Baugruppe elektrisch verbindbar ist, vorzugsweise durch eine zweite Öffnung in dem Steckverbindergehäuse unmittelbar zugänglich ist, und dass das optische Element durch eine erste Öffnung in dem Steckverbindergehäuse für eine optische Verbindung mit einem separaten optischen Gegensteckverbinder zugänglich ist.

Vorzugsweise werden die Montageschritte der optischen Baugruppe automatisiert durchgeführt, beispielsweise mittels eines Pick-and-Place-Automaten und/oder unter Verwendung optischer Messverfahren.

Durch Auslagerung von Präzisionsarbeitsschritten auf die Herstellung der optischen Baugruppe bzw. des optoelektrischen Steckverbinders wird eine anschließend einfache und robuste Integration des vormontierten optoelektrischen Steckverbinders in einer elektrischen Baugruppe (z. B. in einem Automobil-Steuergerät) möglich.

Die Verbindung zwischen dem optoelektronischen Bauteil, beispielsweise einer Photodiode oder einem Laser, mit dem elektrischen Schaltungsträger bzw. elektrischen Bauteilen des elektrischen Schaltungsträgers kann mittels gängiger elektrischer Verbindungstechniken erfolgen (beispielsweise durch unmittelbares Bonden auf einen auf dem primären elektrischen Schaltungsträger angeordneten Leistungstreiber oder durch Verlöten auf dem Schaltungsträger selbst).

Merkmale, die im Zusammenhang mit einem der Gegenstände der Erfindung, namentlich gegeben durch den erfindungsgemäßen optoelektrischen Steckverbinder, die optische Steckverbindung, die Baugruppenanordnung oder das Verfahren beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine Baugruppenanordnung aus einem optoelektrischen Steckverbinder und einer elektrischen Baugruppe, sowie eine optische Steckverbindung aus dem optoelektrischen Steckverbinder und einem optischen Gegensteckverbinder, gemäß einem Ausführungsbeispiel der Erfindung, in einer seitlichen Schnittdarstellung;
- Figur 2: die Baugruppenanordnung und die optische Steckverbindung gemäß Figur 1 in einem gesteckten Zustand des optoelektrischen Steckverbinders und des optischen Gegensteckverbinders;
- Figur 3: einen vergrößerten Ausschnitt der optischen und mechanischen Schnittstellen des optoelektrischen Steckverbinders und des optischen Gegensteckverbinders im gesteckten Zustand der Steckverbindung gemäß Figur 2;
- Figur 4: eine perspektivische Darstellung des auf einer sekundären elektrischen Leiterplatte der elektrischen Baugruppe montierten optoelektrischen Steckverbinders, mit ausgeblendetem Baugruppengehäuse;
- Figur 5: eine perspektivische Einzeldarstellung des optoelektrischen Steckverbinders der Figuren 1 bis 4;
- Figur 6: eine geschnittene Draufsicht des optoelektrischen Steckverbinders gemäß Figur 5;
- Figur 7: eine perspektivische Einzeldarstellung der optischen Baugruppe des optoelektrischen Steckverbinders der Figuren 1 bis 6;
- Figur 8: die optische Baugruppe gemäß Figur 7 ohne das optische Element zur Darstellung des optoelektronischen Bauteils; und
- Figur 9: einen vergrößerten Ausschnitt einer seitlichen Schnittdarstellung der optischen und mechanischen Schnittstellen eines optoelektrischen Steckverbinders und eines optischen Gegensteckverbinders gemäß einer Variante der Erfindung.

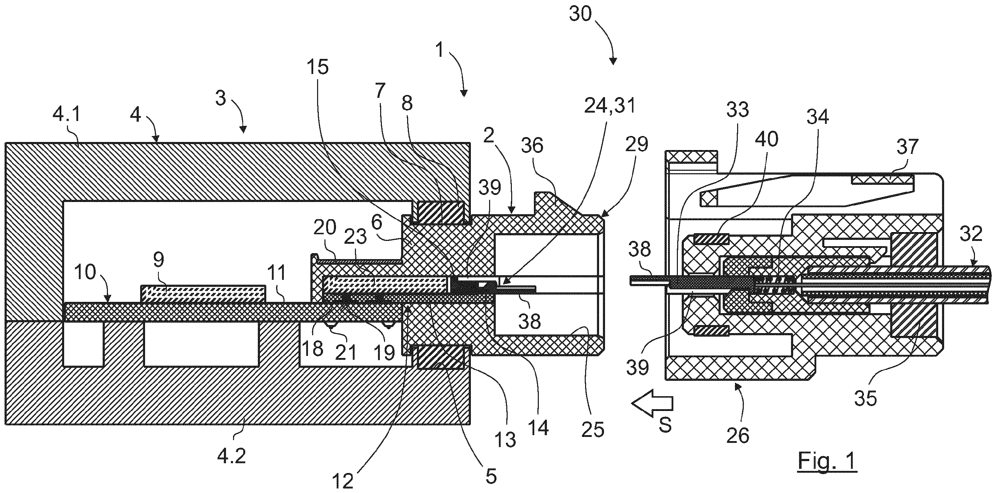

Die Erfindung soll nachfolgend anhand eines in den Figuren 1 bis 8 dargestellten, ersten Ausführungsbeispiels figurenübergreifend beschrieben werden.

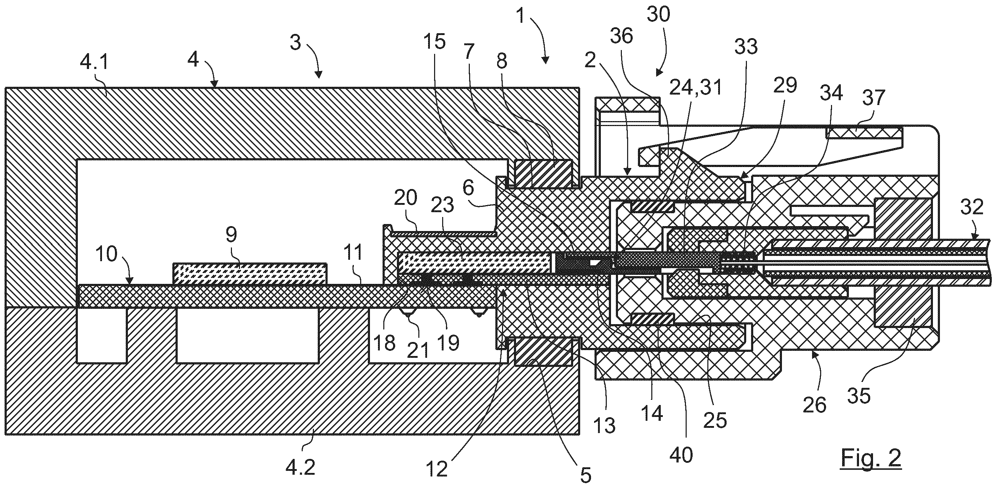

Die Figuren 1 und 2 zeigen eine Baugruppenanordnung 1, die einen optoelektrischen Steckverbinder 2 und eine elektrische Baugruppe 3 aufweist. Die elektrische Baugruppe 3 umfasst ein Baugruppengehäuse 4, das in den Figuren 1 und 2 beispielhaft mehrteilig aus einer ersten Gehäuseschale 4.1 und einer zweiten Gehäuseschale 4.2 ausgebildet ist. Der optoelektrische Steckverbinder 2 ist durch eine Durchführung 5 in dem Baugruppengehäuse 4 bzw. zwischen den Gehäuseschalen 4.1, 4.2 hindurchgeführt und dient damit als Gehäuse- bzw. Leiterplattensteckverbinder der elektrischen Baugruppe 3. Zur Befestigung an dem Baugruppengehäuse 4 der elektrischen Baugruppe 3 weist das Steckverbindergehäuse 6 des optoelektrischen Steckverbinders 2 einen Befestigungsabschnitt 7 auf, der in dem dargestellten Ausführungsbeispiel eine umfangsseitig umlaufende Vertiefung bzw. Nut ausbildet, so dass der optoelektrische Steckverbinder 2 mechanisch stabil in dem Baugruppengehäuse 4 fixiert ist. Es kann vorteilhaft sein, eine Dichtung 8 in der Durchführung 5 des Baugruppengehäuses 4 anzuordnen, wie in den Figuren 1 und 2 angedeutet.

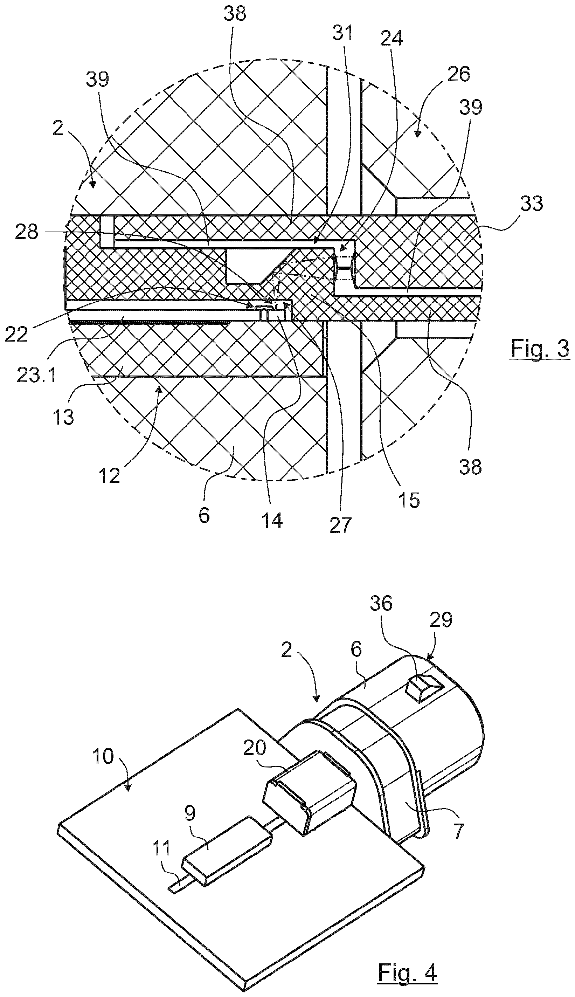

Innerhalb des Baugruppengehäuses 4 weist die elektrische Baugruppe 3 wenigstens eine sekundäre elektrische Schaltung 9 auf, die auf einer sekundären elektrischen Leiterplatte 10 angeordnet ist. Beispielhaft ist die sekundäre elektrische Schaltung 9 als "Black Box" dargestellt. Die sekundäre elektrische Schaltung 9 kann aus mehreren einzelnen elektrischen Bauteilen gebildet sein kann, die beliebig auf der sekundären elektrischen Leiterplatte 10 verteilt angeordnet und über Verbindungsleitungen 11 (vgl. beispielsweise Figur 4) miteinander verbunden sein können.

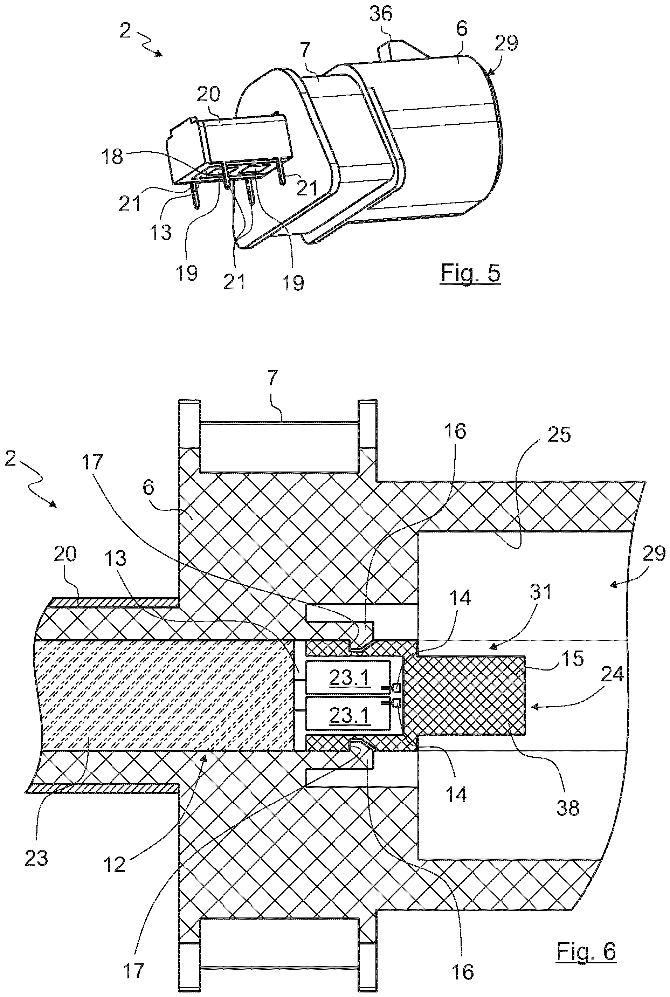

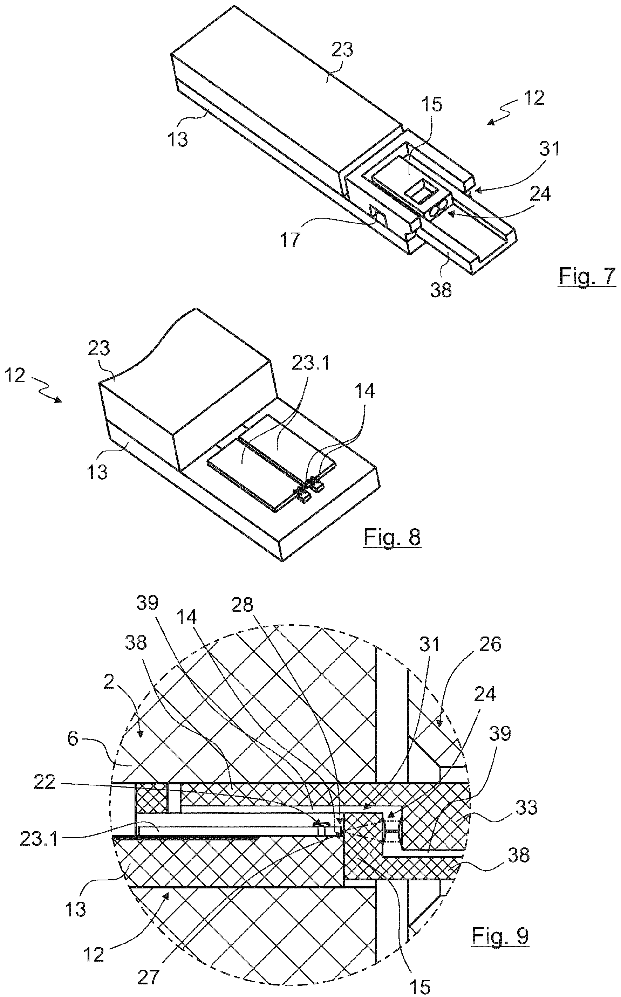

Der optoelektrische Steckverbinder 2 weist eine in dem Steckverbindergehäuse 6 aufgenommene optische Baugruppe 12 auf (vgl. unter anderem die perspektivische Einzeldarstellung in Figur 7 und die geschnittene Draufsicht gemäß Figur 6). Die optische Baugruppe 12 umfasst einen primären elektrischen Schaltungsträger 13 bzw. eine primäre elektrische Leiterplatte 13, wenigstens ein optoelektronisches Bauteil 14 zur optoelektrischen Signalwandlung (in dem Ausführungsbeispiel sind beispielhaft zwei optoelektronische Bauteile 14 vorgesehen, vgl. z. B. Figur 6 oder 7) und wenigstens ein optisches Element 15. Das optische Element 15 ist in Figur 8 zur besseren Darstellung des optoelektrischen Bauteils 14 ausgeblendet.

Die optische Baugruppe 12 kann in dem Steckverbindergehäuse 6 befestigt sein, insbesondere verpresst, verklebt oder verrastet sein, beispielsweise durch einen oder mehrere Rastarme 16 des Steckverbindergehäuses 6, die in korrespondierende Vertiefungen 17 der optischen Baugruppe 12 eingreifen (z. B. in Vertiefungen in dem primären elektrischen Schaltungsträger 13 oder in dem optischen Element 15), wie in Figur 6 gut erkennbar.

Durch eine zweite Öffnung 18 in dem Steckverbindergehäuse 6 ist die primäre elektrische Leiterplatte 13 für eine elektrische und mechanische Verbindung mit der elektrischen Baugruppe 3 bzw. mit der sekundären elektrischen Leiterplatte 10 der elektrischen Baugruppe 3 zugänglich (vgl. unter anderem die Figuren 1, 2 und 5). Bevorzugt ist eine permanente und unmittelbare elektrische und mechanische Verbindung zwischen der primären elektrischen Leiterplatte 13 und der sekundären elektrischen Leiterplatte 10 vorgesehen (d. h. keine Steckverbindung). Hierfür kann die primäre elektrische Leiterplatte 13 und/oder die sekundäre elektrische Leiterplatte 10 geeignete elektrische und/oder mechanische Verbindungsmittel aufweisen, wie beispielsweise elektrisch leitfähig beschichtete Kontaktflächen 19 (vgl. die Figuren 1, 2 und 5) oder sonstige elektrische und/oder mechanische Verbindungsmittel, wie beispielsweise Lötflächen, Lötkontaktstifte, Einpresskontaktstifte oder Kontaktaufnahmen.

Optional kann der optoelektrische Steckverbinder 2, insbesondere in dem elektrischen und mechanischen Anschlussbereich mit dem sekundären elektrischen Schaltungsträger bzw. der sekundären elektrischen Leiterplatte 10, eine elektromagnetische Abschirmung 20 aufweisen, wie beispielsweise ein Schirmungsblech (vgl. u. a. Figur 5). Im Ausführungsbeispiel ist die Abschirmung 20 bzw. das Schirmungsblech über mehrere Lötkontaktstifte 21 in zugehörigen Durchkontaktierungen bzw. "Vias" der sekundären elektrischen Leiterplatte 10 befestigt, beispielsweise verlötet (vgl. u. a. Figur 1 und 5).

Das optoelektronische Bauteil 14, das beispielsweise eine optische Strahlungsquelle, einen Photodetektor und/oder einen optischen Transceiver aufweisen kann, um die Signalwandlung zwischen den optischen und elektrischen Signalen zu ermöglichen, ist elektrisch mittelbar oder unmittelbar mit der primären elektrischen Leiterplatte 13 über eine elektrische Schnittstelle 22 verbunden (vgl. die vergrößerte Darstellung in Figur 3). Das optoelektronische Bauteil 14 kann beispielsweise mittels Bonden unmittelbar mit einem Leistungstreiber 23.1, unmittelbares Verlöten auf der primären elektrischen Leiterplatte 13 oder über einer sonstige elektrische Verbindungstechnik mittelbar oder unmittelbar mit der primären elektrischen Leiterplatte 13 verbunden sein.

Der primäre elektrische Schaltungsträger bzw. die primäre elektrische Leiterplatte 13 kann wiederum eines oder mehrere elektrische Bauteile aufweisen, die einzeln oder in Kombination eine primäre elektrische Schaltung 23 zur elektrischen Versorgung des optoelektronischen Bauteils 14 und/oder zur elektrischen Signalverarbeitung von über das optoelektronische Bauteil 14 empfangenen oder zu übertragenden Signalen ausbilden. Besagte primäre elektrische Schaltung 23 ist wiederum beispielhaft als "Black Box" auf der primären elektrischen Leiterplatte 13 angedeutet, wobei der Leistungstreiber 23.1, mit dem das optoelektronische Bauteil 14 unmittelbar über Bonddrähte verbunden ist, separat dargestellt ist (vgl. u. a. Figur 3 und Figur 8). Grundsätzlich kann der Leistungstreiber 23.1 allerdings auch als Teil der primären elektrischen Schaltung 23 verstanden werden.

Das optische Element 15 der optischen Baugruppe 12 des optoelektrischen Steckverbinders 2 weist einen ersten optischen Verbindungsbereich 24 auf, der durch eine erste Öffnung 25 in dem Steckverbindergehäuse 6 für eine optische Verbindung mit einem optischen Gegensteckverbinder 26 zugänglich ist. Besagtes optisches Element 15 weist außerdem einen zweiten optischen Verbindungsbereich 27 auf, der zur optischen Signalübertragung auf eine optische Schnittstelle 28 des optoelektronischen Bauteils 14 ausgerichtet ist, wobei das optoelektronische Bauteil 14 und das optische Element 15 relativ zueinander unbeweglich mit der primären elektrischen Leiterplatte 13 verbunden sind. Der Sachverhalt ist besonders gut anhand der vergrößerten Darstellung der Figur 3 erkennbar.

Auf vorteilhafte Weise kann im Rahmen der Erfindung sichergestellt sein, dass eine mechanische Beeinflussung des optoelektrischen Steckverbinders 2 im Bereich einer primären Steckschnittstelle 29 zur Verbindung mit dem optischen Gegensteckverbinder 26 die optische Ausrichtung zwischen dem optoelektronischen Bauteil 14 und dem optischen Element 15 nicht negativ beeinflusst. Eine Möglichkeit, die optische Ausrichtung des optoelektronischen Bauteils 14 und des optischen Elements 15 relativ zueinander dauerhaft sicherzustellen, kann beispielsweise eine stoffschlüssige jeweilige Verbindung mit der primären elektrischen Leiterplatte 13 sein, beispielsweise eine Klebeverbindung.

Der zweite optische Verbindungsbereich 27 des optischen Elements 15 kann die optische Schnittstelle 28 des optoelektronischen Bauteils 14 unmittelbar mechanisch kontaktieren oder über einen Luftspalt von der optischen Schnittstelle 28 des optoelektronischen Bauteils 14 beabstandet sein, wie in Figur 3 dargestellt.

In den Figuren 1 und 2 ist außerdem noch die erfindungsgemäße optische Steckverbindung 30 dargestellt (in Figur 1 in einem geöffneten und in Figur 2 in einem gesteckten Zustand), die den zuvor beschriebenen optoelektrischen Steckverbinder 2 und den optischen Gegensteckverbinder 26 umfasst.

Bei dem Gegensteckverbinder 26 kann es sich insbesondere um einen Kabelsteckverbinder handeln, der mit einem Lichtwellenleiter 32, beispielsweise einem Glasfaserkabel, verbunden ist. Der optische Gegensteckverbinder 26 weist eine mit dem Lichtwellenleiter 32 verbundene Ferrule 33 auf, die in dem dargestellten Ausführungsbeispiel mittels eines optionalen Federelements 34 elastisch beweglich gelagert ist. Wie sich insbesondere im Hinblick auf Figur 3 ergibt, dient die Ferrule 33 zur optischen und mechanischen Verbindung mit dem ersten optischen Verbindungsbereich 24 des optischen Elements 15 der optischen Baugruppe 12 des optoelektrischen Steckverbinders 2. Im Bereich der Kabelzuführung kann der Gegensteckverbinder 26 vorzugsweise eine Kabeldichtung 35 aufweisen.

Bei dem optischen Element 15 kann es sich grundsätzlich um ein beliebiges optisches Element handeln, beispielsweise um ein Strahlformungsmittel, ein Strahlumlenkungsmittel und/oder ein Strahlaufteilungsmittel. Auch Kombinationen sind möglich. Beispielhaft bewirken das optische Element 15 und die Ferrule 33 jeweils eine Strahlformung. Im Falle einer mehrkanaligen oder bidirektionalen Datenübertragung können das optische Element 15 und/oder optische Kanäle in der Ferrule 33 oder deren optisch aktive Bereiche bzw. Elemente auch mehrfach vorhanden sein (beispielhaft sind in Figur 7 zwei einzelne Linsen des optischen Elements 15 dargestellt).

Das Steckverbindergehäuse 6 des optoelektrischen Steckverbinders 2 weist im Bereich der ersten Öffnung 25 die bereits erwähnte, primäre mechanische Steckschnittstelle 29 zur Verbindung mit dem optischen Gegensteckverbinder 26 auf. Die erste Öffnung 25 bzw. die Steckschnittstelle 29 kann vorzugsweise in einem nicht mit dem Gegensteckverbinder 26 verbundenen Zustand verschließbar sein, beispielsweise durch ein Deckelelement (nicht dargestellt), um ein Verschmutzen der nicht gesteckten Steckschnittstelle 29 zu verhindern. Besagte primäre mechanische Steckschnittstelle 29 umfasst beispielhaft ein als Rasthaken ausgebildetes Rastelement 36 zur Verrastung mit einem als eine Rastwippe ausgebildeten Gegenrastelement 37 des optischen Gegensteckverbinders 26.

Das optische Element 15 weist zudem eine sekundäre mechanische Steckschnittstelle 31 zur gegenseitigen Ausrichtung und Verbindung mit der Ferrule 33 des optischen Gegensteckverbinders 26 auf. In dem Ausführungsbeispiel (vgl. insbesondere Figur 3) sind das optische Element 15 und die Ferrule 33 im gesteckten Zustand miteinander zusammengesteckt und hierfür mit einer jeweiligen, in Steckrichtung S verlaufenden Verlängerung 38 in einen korrespondierenden Rücksprung 39 des Gegenparts, wie z. B. einen Schlitz, eingefügt. Auf diese Weise kann eine Feinjustierung im Rahmen des Steckvorgangs und damit eine optimale optische Ausrichtung zwischen dem optischen Element 15 und der Ferrule 33 erfolgen. Durch das vorstehend bereits erwähnte Federelement 34 des optischen Gegensteckverbinders 26 kann die Flexibilität des Steckvorgangs bei gleichbleibend hoher optischer Präzision dabei noch verbessert werden.

Auf vorteilhafte Weise kann die Steckverbindung zwischen dem optoelektrischen Steckverbinder 2 und dem Gegensteckverbinder 26 durch ein Dichtungselement 40 abgedichtet sein. Das Dichtungselement 40 ist in den Ausführungsbeispielen beispielhaft im Gegensteckverbinder 26 angeordnet, kann alternativ oder zusätzlich aber auch im Steckverbindergehäuse 6 des optoelektrischen Steckverbinders 2 angeordnet sein.

In dem Ausführungsbeispiel der Figuren 1 bis 8 ist beispielhaft ein optisches Element 15 des optoelektrischen Steckverbinders 2 dargestellt, das ausgehend von einer Strahlformung für die optische Verbindung mit dem Gegensteckverbinder 26 zusätzlich eine Strahlumlenkung auf das optoelektronische Bauteil 14 bewirkt (vgl. Figur 3). Alternativ hierzu kann eine Strahlumlenkung allerdings auch entfallen und die Signalweiterleitung zumindest im Wesentlichen parallel zur Steckrichtung S erfolgen, wie in Figur 9 angedeutet. Wie bereits erwähnt, kann das optische Element 15 eine beliebige Strahlumformung, Strahlumlenkung und/oder Strahlaufteilung oder sonstige optische Manipulation des optischen Signals vornehmen.

Vorsorglich sei erwähnt, dass die vorstehend beschriebenen Ausführungsformen und Varianten der Erfindung lediglich beispielhaft und nicht einschränkend zu verstehen sind. Insbesondere können der optoelektrische Steckverbinder 2 und der optische Gegensteckverbinder 26 gemäß einem beliebigen Steckverbinderstandard ausgebildet sein und insbesondere eine beliebige Anzahl Datenkanäle aufweisen. Die in den Figuren 6 bis 8 dargestellten, zwei optischen Signalwege sind daher lediglich beispielhaft zu verstehen.

## Patentansprüche

1. Optoelektrischer Steckverbinder (2) für eine elektrische Baugruppe (3), zur Verbindung mit einem optischen Gegensteckverbinder (26), mit einem Steckverbindergehäuse (6) und mit einer in dem Steckverbindergehäuse (6) aufgenommenen optischen Baugruppe (12), die optische Baugruppe (12) aufweisend:
- einen mit der elektrischen Baugruppe (3) elektrisch verbindbaren, primären elektrischen Schaltungsträger, vorzugsweise eine primäre elektrische Leiterplatte (13);
- ein optoelektronisches Bauteil (14) mit wenigstens einer elektrisch mit dem primären elektrischen Schaltungsträger (13) verbundenen elektrischen Schnittstelle (22) und mit wenigstens einer optischen Schnittstelle (28);
- ein optisches Element (15) mit wenigstens einem durch eine erste Öffnung (25) in dem Steckverbindergehäuse (6) für eine optische Verbindung mit dem optischen Gegensteckverbinder (26) zugänglichen, ersten optischen Verbindungsbereich (24) und mit wenigstens einem zweiten optischen Verbindungsbereich (27), der zur optischen Signalübertragung auf die optische Schnittstelle (28) des optoelektronischen Bauteils (14) ausgerichtet ist,
wobei das optoelektronische Bauteil (14) und das optische Element (15) relativ zueinander unbeweglich mit dem primären elektrischen Schaltungsträger (13) verbunden sind.

2. Optoelektrischer Steckverbinder (2) nach Anspruch 1,
**dadurch gekennzeichnet , dass**
der primäre elektrische Schaltungsträger (13) der optischen Baugruppe (12) durch eine zweite Öffnung (18) des Steckverbindergehäuses (6) für eine permanente elektrische und mechanische Verbindung mit einem sekundären elektrischen Schaltungsträger (10) der elektrischen Baugruppe (3) zugänglich ist.

3. Optoelektrischer Steckverbinder (2) nach Anspruch 2,
**dadurch gekennzeichnet, dass**
der primäre elektrische Schaltungsträger (13) für die permanente Verbindung mit dem sekundären elektrischen Schaltungsträger (10) der elektrischen Baugruppe (3) wenigstens ein elektrisches Verbindungsmittel aufweist, vorzugsweise eine Lötfläche, eine elektrisch leitfähig beschichtete Kontaktfläche (19), einen Lötkontaktstift, einen Einpresskontakt oder eine elektrische Kontaktaufnahme.

4. Optoelektrischer Steckverbinder (2) nach einem der Ansprüche 1 bis 3,
**dadurch gekennzeichnet, dass**
das Steckverbindergehäuse (6) wenigstens einen Befestigungsabschnitt (7) zur mechanischen Befestigung an der elektrischen Baugruppe (3) aufweist, insbesondere zur Befestigung an einem Baugruppengehäuse (4) der elektrischen Baugruppe (3).

5. Optoelektrischer Steckverbinder (2) nach einem der Ansprüche 1 bis 4,
**dadurch gekennzeichnet, dass**
das optoelektronische Bauteil (14) und/oder das optische Element (15) stoffschlüssig mit dem primären elektrischen Schaltungsträger (13) verbunden sind, insbesondere mit dem primären elektrischen Schaltungsträger (13) verklebt sind.

6. Optoelektrischer Steckverbinder (2) nach einem der Ansprüche 1 bis 5,
**dadurch gekennzeichnet, dass**
der zweite optische Verbindungsbereich (27) des optischen Elements (15) die optische Schnittstelle (28) des optoelektronischen Bauteils (14) unmittelbar mechanisch kontaktiert oder über einem Luftspalt von der optischen Schnittstelle (28) des optoelektronischen Bauteils (14) beabstandet ist.

7. Optoelektrischer Steckverbinder (2) nach einem der Ansprüche 1 bis 6,
**dadurch gekennzeichnet, dass**
das Steckverbindergehäuse (6) im Bereich der ersten Öffnung (25) eine primäre mechanische Steckschnittstelle (29) zur Verbindung mit dem optischen Gegensteckverbinder (26) ausbildet, vorzugsweise aufweisend ein Rastelement (36) zur Verrastung mit einem Gegenrastelement (37) des optischen Gegensteckverbinders (26).

8. Optoelektrischer Steckverbinder (2) nach einem der Ansprüche 1 bis 7,
**dadurch gekennzeichnet, dass**
das optische Element (15) eine sekundäre mechanische Steckschnittstelle (31) zur gegenseitigen Ausrichtung und Verbindung mit einem optischen Gegenelement und/oder einer Ferrule (33) des optischen Gegensteckverbinders (26) ausbildet, vorzugsweise aufweisend einen sich in einer Steckrichtung (S) erstreckenden Vorsprung (38) und/oder einen Rücksprung (39).

9. Optoelektrischer Steckverbinder (2) nach einem der Ansprüche 1 bis 8,
**dadurch gekennzeichnet, dass**
das optische Element (15) ein Strahlformungsmittel, ein Strahlumlenkungsmittel und/oder ein Strahlaufteilungsmittel aufweist.

10. Optoelektrischer Steckverbinder (2) nach einem der Ansprüche 1 bis 9,
**dadurch gekennzeichnet, dass**
das optoelektronische Bauteil (14) eine optische Strahlungsquelle, einen Photodetektor und/oder einen optischen Transceiver aufweist.

11. Optoelektrischer Steckverbinder (2) nach einem der Ansprüche 1 bis 10,
**dadurch gekennzeichnet, dass**
der primäre elektrische Schaltungsträger (13) eines oder mehrere elektrische Bauteile aufweist, die einzeln oder in Kombination eine primäre elektrische Schaltung (23) zur elektrischen Versorgung des optoelektronischen Bauteils (14) und/oder zur elektrischen Signalverarbeitung von über das optoelektronische Bauteil (14) empfangenen oder zu übertragenden Signalen ausbilden.

12. Optische Steckverbindung (30), aufweisend einen optoelektrischen Steckverbinder (2) gemäß einem der Ansprüche 1 bis 11 und den optischen Gegensteckverbinder (26).

13. Optische Steckverbindung (30) nach Anspruch 12,
**dadurch gekennzeichnet, dass**
der optische Gegensteckverbinder (26) eine mit einem Lichtwellenleiter (32) verbundene Ferrule (33) und/oder ein optisches Gegenelement zur optischen und mechanischen Verbindung mit dem ersten optischen Verbindungsbereich (24) des optischen Elements (15) der optischen Baugruppe (12) des optoelektrischen Steckverbinders (2) aufweist.

14. Optische Steckverbindung (30) nach Anspruch 12 oder 13,
**dadurch gekennzeichnet, dass**
die Ferrule (33) in dem optischen Gegensteckverbinder (26) elastisch beweglich gelagert ist, vorzugsweise durch ein zwischen der Ferrule (33) und einem Gegensteckverbindergehäuse angeordnetes Federelement (34).

15. Baugruppenanordnung (1), aufweisend einen optoelektrischen Steckverbinder (2) gemäß einem der Ansprüche 1 bis 11 und die elektrische Baugruppe (3), wobei der primäre elektrische Schaltungsträger (13) der optischen Baugruppe (12) des optoelektrischen Steckverbinders (2) mit einem sekundären elektrischen Schaltungsträger (10) der elektrischen Baugruppe (3) permanent elektrisch und mechanisch verbunden ist.
